# EUROPÄISCHE PATENTANMELDUNG

(11) **EP 4 513 420 A2**
(43) Veröffentlichungstag der Anmeldung: **26.02.2025**
(21) Anmeldenummer: 24221361.9
(22) Anmeldetag: 13.03.2018
(51) Int. Cl.: G06Q 50/04

(54) **VERFAHREN ZUR HANDHABUNG EINES BESCHICHTUNGSMATERIALS SOWIE VERWENDUNG**

(30) Priorität: 15.03.2017 DE 102017105504
(62) Teilanmeldung aus: 18711303.0
(71) Anmelder: HOMAG GmbH, 72296 Schopfloch (DE)
(72) Erfinder: Albrecht, Ludwig, 72280 Dornstetten-Aach (DE)
(74) Vertreter: Hoffmann Eitle

(57) **Zusammenfassung**

Die vorliegende Erfindung betrifft ein Verfahren zur Handhabung eines Beschichtungsmaterials, aufweisend die Schritte: Kennzeichnen des Beschichtungsmaterials mit einer Kennzeichnung zur Identifikation einer das Beschichtungsmaterial betreffenden ersten Information, Speichern der das Beschichtungsmaterial betreffenden ersten Information auf einem cloudbasierten Server, und Erfassen der Kennzeichnung des Beschichtungsmaterials, wodurch die das Beschichtungsmaterial betreffende erste Information über den cloudbasierten Server zugänglich wird.

## Beschreibung

### Technisches Gebiet

Die vorliegende Erfindung betrifft ein Verfahren zur Handhabung eines Beschichtungsmaterials, insbesondere eines Beschichtungsmaterials zum Anbringen an einer Schmalseite eines Werkstücks, eine Verwendung eines Beschichtungsmaterials sowie eine Handhabungsvorrichtung. Bei einem derartigen Beschichtungsmaterial kann es sich beispielsweise um ein Kantenband handeln, das an einer Schmalseite eines, bevorzugt plattenförmigen, Werkstücks angebracht wird.

### Stand der Technik

Im Stand der Technik sind bereits Verfahren zum Kennzeichnen von Werkstücken bekannt. Beispielsweise werden Werkstücke mit einem Barcode bedruckt, ein entsprechendes Barcode-Etikett auf ein Werkstück aufgebracht, oder sogenannte RFID-Chips verwendet. Des Weiteren sind Kennzeichnungsverfahren bekannt, die eine optisch nicht wahrnehmbare Kennzeichnung ermöglichen.

Die Kennzeichnung dient dabei mehrheitlich der eindeutigen Identifikation des Werkstückes im Produktionsverlauf. Zusätzlich zu einem Identifikationsmerkmal können auch Werkstückmerkmale wie zum Beispiel Dimension, Farbe und Werkstoff auf dem Kennzeichnungsmerkmalträger hinterlegt werden. Durch Assoziierung dieser (Identifikations-)Merkmale mit entsprechenden Routinen im Produktionsprozess kann die Verarbeitung der Werkstücke weitgehend automatisiert erfolgen.

Weiterhin ermöglicht die Kennzeichnung die Rückverfolgung der Herkunft und Prozessroute des Werkstückes. So können bei fehlerhaften Produkten sowohl der Hersteller als auch die betroffene Charge eines Werkstückes einwandfrei identifiziert werden.

In den letzten Jahren ist, angetrieben von der gesteigerten Verbrauchernachfrage an Fertigprodukten wie Möbeln, der Bedarf an Beschichtungsmaterial stetig gestiegen. Während jedoch in der Vergangenheit die Hersteller von beschichteten Werkstücken vornehmlich große Stückzahlen an gleichen Werkstücken mit nur wenigen Beschichtungsmaterialarten (Dicke, Farbe, Form, Werkstoff etc.) herstellten und somit nur wenige unterschiedliche Beschichtungsmaterialien vorrätig bzw. im Einsatz haben mussten, ist in den letzten Jahren ein zunehmender Trend zur Individualisierung, d.h. zu kleineren Losgrößen mit einer einhergehenden größeren Losvielfalt, zu beobachten. Dementsprechend müssen Hersteller heutzutage eine bald unüberschaubare Zahl von Beschichtungsmaterialarten ordern, lagern und verarbeiten, wobei häufig ein bestimmtes Beschichtungsmaterial nur für sehr geringe Werkstückzahlen verwendet wird. Dementsprechend nimmt der Platzbedarf für die Lagerung des Beschichtungsmaterials stark zu und dementsprechend aufwändig gestaltet sich dann auch das Handling des Beschichtungsmaterials. Ferner ist es dementsprechend oft notwendig, die jeweiligen Bearbeitungsvorrichtungen, insbesondere die Beschichtungsmaschinen, mit neuen dem jeweiligen Beschichtungsmaterial zugeordneten Verarbeitungsdaten zu versorgen.

Um diesem Umstand Rechnung zu tragen schlägt der Stand der Technik vor, die Kennzeichnung der einzelnen Werkstücke bzw. einer Meterware, wie z.B. Beschichtungsmaterial, nicht nur mit einer Information zur eindeutigen Identifikation des Werkstücks zu versehen, sondern zusätzlich Verarbeitungsdaten mit abgelegt werden, insbesondere in einem RFID-Tag gespeichert werden und bei der Verarbeitung des Werkstücks, insbesondere beim Aufbringen des Beschichtungsmaterials, ausgelesen werden können und einer Verarbeitungsmaschine zur Einstellung der Verarbeitungsparameter zur Verfügung gestellt werden.

Aufgrund der heutigen hohen Varianz an Beschichtungs-materialien, besteht jedoch ferner das Problem, dass es den Herstellern der Beschichtungsmaterialien oft nicht möglich ist, eine ausreichende Anzahl an Versuchen durchzuführen, um verarbeitende Betriebe mit optimalen Verarbeitungsdaten (Prozessparametern) zu versorgen. In vielen Fällen wünschen verarbeitende Betriebe auch kundenspezifisch angefertigte Beschichtungsmaterialien mit derart geringer Stückzahl, dass sich eine separate Erprobung der optimalen Verarbeitungsdaten finanziell nicht rechnet.

### Gegenstand der Erfindung

Ziel der vorliegenden Erfindung ist es daher, ein Verfahren zur Handhabung eines Beschichtungsmaterials bereitzustellen, anhand dessen es möglich ist, auf einfache Weise einem Bediener einer Bearbeitungsvorrichtung, insbesondere einer Beschichtungsmaschine, während der Verarbeitung des Beschichtungsmaterials eine das Beschichtungsmaterial betreffende Information, insbesondere aktualisierte Verarbeitungsdaten, zur Verfügung zu stellen.

Die Aufgabe wird gelöst durch ein Verfahren nach Anspruch 1, eine Verwendung nach Anspruch 16 sowie eine Handhabungsvorrichtung nach Anspruch 17. Bevorzugte Weiterbildungen der Erfindung sind in den abhängigen Ansprüchen gegeben.

Ein Gedanke der vorliegenden Erfindung ist es, ein Beschichtungsmaterial mit einer Kennzeichnung zur Identifikation einer das Beschichtungsmaterial betreffenden ersten Information zu kennzeichnen, die das Beschichtungsmaterial betreffende erste Information auf einem cloudbasierten Server zu speichern und nach Erfassen der Kennzeichnung des Beschichtungsmaterials die das Beschichtungsmaterial betreffende erste Information über den cloudbasierten Server zugänglich zu machen.

Mittels des vorgeschlagenen Verfahrens ist es möglich, nach dem Erfassen der Kennzeichnung des Beschichtungsmaterials, eine das Beschichtungsmaterial betreffende Information, insbesondere Verarbeitungsdaten, über einen cloudbasierten Server zugänglich zu machen, insbesondere einem Bediener einer Bearbeitungsvorrichtung zur Verfügung zu stellen.

Gemäß der vorliegenden Erfindung weist das Verfahren zu Handhabung eines Beschichtungsmaterials, insbesondere eines Beschichtungsmaterials zum Anbringen an einer Schmalseite eines Werkstücks, bevorzugt plattenförmigen Werkstücks, wobei das Werkstück bevorzugt zumindest teilweise aus Holz, Holzwerkstoffen, Holzersatzwerkstoffen, Kunststoff oder einer Kombination hiervon besteht, die Schritte auf:
Kennzeichnen des Beschichtungsmaterials mit einer Kennzeichnung zur Identifikation einer das Beschichtungsmaterial betreffenden ersten Information,
Speichern der das Beschichtungsmaterial betreffenden ersten Information auf einem cloudbasierten Server,
Erfassen der Kennzeichnung des Beschichtungsmaterials, wodurch die das Beschichtungsmaterial betreffende erste Information über den cloudbasierten Server zugänglich wird, wobei es sich bei der über den cloudbasierten Server zugänglich gemachten ersten Information bevorzugt um eine stets aktualisierte erste Information handelt.

In vorliegender Erfindung ist unter dem Begriff "cloudbasierter Server" ein Server gemeint, welcher eine World-Wide-Web-Adresse aufweist und eine Internet-Verbindbarkeit schafft, anhand der die auf dem Server abgespeicherten Informationen, die bevorzugt von einer Datenbank verwaltet werden, über eine Datenfernübertragung zugänglich gemacht werden. Somit kann über weite Entfernungen, insbesondere außerbetrieblich, auf die auf dem Server gespeicherten Daten zugegriffen werden. Der cloudbasierte Server stellt sozusagen in einer Cloud eine Datenbank zur Verfügung, auf die einzelne Personen zugreifen können, um ihre Daten cloudbasiert zu teilen bzw. auszutauschen.

Gemäß einer Ausführungsform der vorliegenden Erfindung weist das Verfahren weiterhin den Schritt auf:
Speichern einer das Beschichtungsmaterial betreffenden zweiten Information, insbesondere Verarbeitungsdaten, auf dem cloudbasierten Server, wobei das Speichern der zweiten Information bevorzugt nach Erfassen der Kennzeichnung des Beschichtungsmaterials und nach Verarbeiten des Beschichtungsmaterials erfolgt.

Auf diese Weise ist es möglich, einem Bediener einer Bearbeitungsvorrichtung, insbesondere einer Beschichtungsmaschine, nicht nur Beschichtungsmaterial betreffende erste Informationen bereitzustellen, sondern es dem Bediener auch ermöglicht, das Beschichtungsmaterial betreffende zweite Informationen, bei denen es sich bevorzugt um Verarbeitungsdaten handelt, die während der Verarbeitung des Beschichtungsmaterials gesammelt wurden, auf dem cloudbasierten Server zu speichern.

Hiermit wird ein Verfahren bzw. ein System geschaffen, mit dem es möglich ist, einen geschlossenen Informationskreis zu schaffen. D.h., nicht nur einen Informationsfluss von einem Hersteller des Beschichtungsmaterials zu einem verarbeitenden Betrieb des Beschichtungsmaterials zu schaffen, sondern es dem verarbeitenden Betrieb auch zu ermöglichen, Informationen, die das Beschichtungsmaterial betreffen, insbesondere dessen Verarbeitung, an den Hersteller des Beschichtungsmaterials zu senden. Auf diese Weise wird die Möglichkeit geschaffen, dass der Hersteller Informationen, insbesondere Erfahrungswerte hinsichtlich der Verarbeitungsdaten, seitens der verarbeitenden Betriebe sammelt.

In einer weiteren Ausgestaltung des erfindungsgemäßen Verfahrens erfolgt die Kennzeichnung des Beschichtungsmaterials während eines Herstellungsprozess des Beschichtungsmaterials und das Erfassen der Kennzeichnung des Beschichtungsmaterials erfolgt während der Verarbeitung des Beschichtungsmaterials, insbesondere während eines Beschichtungsprozess eines Werkstücks mit dem Beschichtungsmaterial.

Wie oben bereits angedeutet, kann die Kennzeichnung des Beschichtungsmaterials herstellerseitig erfolgen und das Erfassen der Kennzeichnung und gegebenenfalls das Speichern einer zweiten Information auf dem cloudbasierten Server kundenseitig (verarbeitender Betrieb) erfolgen.

Ferner ist es bevorzugt, wenn die erste Information ausgewählt ist aus: einer Artikelnummer, einer Dimension, einer Eigenschaft, einer Chargennummer, eines Herstellungsdatums, eines Haltbarkeitsdatums, und/oder Verarbeitungsdaten des Beschichtungsmaterials, insbesondere einer Schmelztemperatur eines Haftmittels oder der Haftschicht des Beschichtungsmaterials.

Bevorzugt ist die zweite Information ausgewählt aus: einer Artikelnummer, Verarbeitungsdaten des Beschichtungsmaterials wie eine Schmelztemperatur eines Haftmittels oder einer Haftschicht des Beschichtungsmaterials, ein Anpressdruck, eine Aushärtezeit des Haftmittels oder der Haftschicht, ein Feedback, eine Qualitätsbewertung des Beschichtungsmaterials und dergleichen.

Gemäß einer weiteren Ausführungsform des erfindungsgemäßen Verfahrens werden nach Verarbeiten des Beschichtungsmaterials über das Erfassen der Kennzeichnung Verarbeitungsdaten, insbesondere als vorteilhaft beurteilte Verarbeitungsdaten, auf dem cloudbasierten Server speicherbar sind, wobei die Speicherung der Verarbeitungsdaten bevorzugt beschichtungsmaterialspezifisch erfolgt.

Hiermit ist es möglich, dass nach Verarbeiten eines Beschichtungsmaterials, insbesondere nach einer Reihe von Verarbeitungsvorgängen mit demselben Beschichtungsmaterial, Verarbeitungsdaten, bei welchen es sich bevorzugt um als vorteilhaft beurteilte Verarbeitungsdaten handelt, auf dem cloudbasierten Server gespeichert werden können. Stellt somit während der Verarbeitung eines bestimmten Beschichtungsmaterials der Bediener fest, dass die seitens des Herstellers des Beschichtungsmaterials zur Verfügung gestellten Verarbeitungsdaten, also die Beschichtungsmaterial betreffende erste Information, optimierbar ist, kann er die optimierten Verarbeitungsdaten beschichtungsmaterial-spezifisch auf dem cloudbasierten Server speichern und somit dem Hersteller zur Verfügung stellen.

Entsprechend ist es vorteilhaft, wenn die auf dem cloudbasierten Server gespeicherte, Beschichtungsmaterial betreffende erste Information aktualisierbar ist, wobei bevorzugt Verarbeitungsdaten wie eine Schmelztemperatur eines Haftmittels oder einer Haftschicht des Beschichtungsmaterials, ein Anpressdruck, eine Aushärtezeit des Haftmittels oder der Haftschicht und dergleichen aktualisierbar sind.

Das heißt, sammelt der Hersteller aufgrund der Rückmeldungen seitens der verarbeitenden Betriebe (Kunden) neue Informationen über das Beschichtungsmaterial, insbesondere in Form der auf dem cloudbasierten Server gespeicherten zweiten Informationen, oder konnte der Hersteller aufgrund von eigenen Versuchen in der Zwischenzeit verbesserte Verarbeitungsdaten ermitteln, ist es möglich, die auf dem Server gespeicherten Daten zu aktualisieren und somit den verarbeitenden Betrieben optimierte erste Informationen, insbesondere optimierte Verarbeitungsdaten bzw. Prozessparameter zur Verfügung zu stellen.

Des Weiteren ist es vorteilhaft, wenn basierend auf einer Vielzahl von auf dem cloudbasierten Server gespeicherten zweiten Informationen, insbesondere gespeicherten Verarbeitungsdaten, die eindeutig einem spezifischen Beschichtungsmaterial und/oder einer spezifischen Charge zuordenbar sind, optimierte Verarbeitungsdaten und/oder Verarbeitungsalgorithmen ermittelbar sind.

Ferner ist es bevorzugt, wenn die ermittelten optimierten Verarbeitungsdaten und/oder Verarbeitungsalgorithmen als aktualisierte erste Information weiterverwendbar sind und/oder als aktualisierte erste Information auf dem cloudbasierten Server speicherbar sind.

Gemäß einer weiteren Ausführungsform des erfindungsgemäßen Verfahrens kann basierend auf den ermittelten optimierten Verarbeitungsdaten und/oder Verarbeitungsalgorithmen eine automatische Aktualisierung von in Bearbeitungsvorrichtungen gespeicherten Verarbeitungsdaten und/oder Verarbeitungsalgorithmen erfolgen.

Auf diese Weise ist es möglich, dass ohne Zutun seitens des Bedieners, nach Einlegen eines neuen Beschichtungsmaterials in eine Beschichtungsmaschine und Erfassen der Kennzeichnung des Beschichtungsmaterials seitens der Beschichtungsmaschine automatisch auf den cloudbasierten Server zugegriffen wird und die aktuellste Beschichtungsmaterial betreffende Information, insbesondere die aktuellsten Verarbeitungsdaten und/oder Verarbeitungsalgorithmen beschafft werden und die Beschichtungsmaschine entsprechend eingerichtet wird.

Ferner ist es bevorzugt, dass basierend auf einer Vielzahl von auf dem cloudbasierten Server gespeicherten zweiten Informationen, insbesondere Qualitätsbewertungen eines spezifischen Beschichtungsmaterials, Rückschlüsse auf Fertigungsprobleme seitens des Herstellers, optimierte Fertigungsparameter, Verschleißerscheinungen bei der Herstellung des Beschichtungsmaterials und/oder bei der Verarbeitung des Verschleißmaterials und der gleichen möglich sind.

Hiermit wird dem Hersteller des Beschichtungsmaterials insbesondere die Möglichkeit gegeben, seine Qualitätssicherung bis hin zur Verarbeitung beim Kunden auszudehnen. Auf diese Weise kann eine Qualitätssicherung und ein Monitoring der Qualität betrieben werden, ohne auf die aktive Rückmeldung des Kunden, welche für gewöhnlich in Form von Reklamationen erfolgt, angewiesen zu sein. Dies bietet ferner die Möglichkeit, bereits präventiv auf Qualitätsprobleme, die gegebenenfalls seitens des Kunden noch nicht als störend wahrgenommen werden, einzugehen und im Voraus bereits Optimierungen am Material selbst oder den vorgeschlagenen Verarbeitungsdaten vorzunehmen, womit die Zufriedenheit des Kunden gewährleistet und gegebenenfalls verbessert werden kann.

Aus diesem Grund ist es weiter bevorzugt, dass die zweite Information, insbesondere als vorteilhaft beurteilte Verarbeitungsdaten, automatisch von der Verarbeitungs-vorrichtung, insbesondere der Beschichtungsmaschine, auf dem cloudbasierten Server gespeichert wird.

Auf diese Weise ist es für den Hersteller des Beschichtungsmaterials möglich, Informationen über das Beschichtungsmaterial ohne Zutun des verarbeitenden Betriebs (Kunden) zu sammeln.

Ferner ist es bevorzugt, dass die erste Information und die zweite Information auf dem cloudbasierten Server passwortgeschützt sind, wobei das Passwort in der Kennzeichnung des Beschichtungsmaterials hinterlegt ist.

Des Weiteren kann das Erfassen der Kennzeichnung des Beschichtungsmaterials in oder an einer Beschichtungsmaschine erfolgen, durch welche Beschichtungsmaschine das Beschichtungsmaterial verwendet wird.

Ebenfalls ist es bevorzugt, dass die Beschichtungsmaschine eine Andruckeinrichtung, insbesondere eine Andruckwalze, zum Aufbringen des Beschichtungsmaterials an einem, bevorzugt plattenförmigen, Werkstück aufweist, wobei nach Erfassen der Kennzeichnung des Beschichtungsmaterials die erste Information in die Steuereinrichtung der Beschichtungsmaschine geladen wird.

Weiter bevorzugt ist es, dass die Steuereinrichtung auf Grundlage der ersten Information ein Werkzeug oder ein Aggregat der Beschichtungsmaschine einstellt und/oder aktiviert, wobei insbesondere eine Leistung einer Energiequelle, wie eines Laser, einer Mikrowellenquellen, einer Heißluftquelle oder einer Infrarotquelle, zum Aktivieren einer Haftschicht des Beschichtungsmaterials eingestellt und/oder aktiviert wird.

Gemäß einer weiteren Ausführungsform des erfindungsgemäßen Verfahrens wird die erste Information an einer Anzeigeeinrichtung der Beschichtungsmaschine oder einem der Beschichtungsmaschine zugeordneten, mobilen Gerät, wie einem Tablet, einem Laptop, einem Smartphone, etc., angezeigt.

Weiterhin kann die Kennzeichnung des Beschichtungsmaterials mittels eines Barcodes, eines 2D-Zeichen-Codes, eines Zahlencodes, eines Magnetstreifens und/oder eines RFID-Tags, erfolgen.

Hierbei ist es bevorzugt, dass die Kennzeichnung des Beschichtungsmaterials am oder im Beschichtungsmaterial vorgesehen ist.

Ebenfalls besteht die Möglichkeit, dass die Kennzeichnung am Beschichtungsmaterial eingeprägt, aufgebracht, insbesondere aufgeklebt, eingebracht, und/oder aufgedruckt ist.

Des Weiteren kann die Kennzeichnung durch ein an der Sichtseite des Beschichtungsmaterials angebrachtes, fluoreszierendes Material ausgebildet sein.

Dabei ist es ferner vorteilhaft, die Kennzeichnung an einem Endabschnitt des Beschichtungsmaterials vorzusehen, welcher Endabschnitt nicht verarbeitet wird.

Auf bevorzugte Weise erfolgt hierbei das Erfassen der Kennzeichnung des Beschichtungsmaterials durch einen Barcode-Leser, einen RFID-Leser und/oder ein NFC-System.

Zusätzlich betrifft die vorliegende Erfindung eine Verwendung eines Beschichtungsmaterials, insbesondere eines Beschichtungsmaterials zum Anbringen an einer Schmalseite eines Werkstücks, in Kombination mit einer Beschichtungsmaschine,
wobei das Beschichtungsmaterial an der Beschichtungsmaschine eingeführt wird, um auf einem, insbesondere plattenförmigen, Werkstück aufgebracht zu werden, wobei eine Erfassungseinrichtung eine Kennzeichnung des Beschichtungsmaterials erfasst, wodurch eine das Beschichtungsmaterial betreffende, auf einem cloudbasierten Server gespeicherte erste Information der Beschichtungsmaschine bereitgestellt wird, insbesondere in eine Steuereinrichtung der Beschichtungsmaschine geladen wird. Zuvor genannte Aspekte können im Rahmen der Verwendung zum Einsatz kommen.

Des Weiteren betrifft die vorliegende Erfindung eine Handhabungsvorrichtung für ein Beschichtungsmaterial, insbesondere zum Anbringen des Beschichtungsmaterials an einer Schmalseite eines Werkstücks. Die Handhabungsvorrichtung umfasst:
eine Erfassungseinrichtung zum Erfassen einer Kennzeichnung des Beschichtungsmaterials, wobei die Kennzeichnung zur Identifikation einer das Beschichtungsmaterial betreffenden ersten Information dient,
eine Übertragungseinrichtung zum Übertragen der Kennzeichnung an einen cloudbasierten Server, der die erste Information in Relation zur Kennzeichnung des Beschichtungsmaterials gespeichert hat,
eine Empfangseinrichtung zum Empfang der das Beschichtungsmaterial betreffenden ersten Information von dem cloudbasierten Server, und
eine Steuereinrichtung, die basierend auf der empfangenen ersten Information die Handhabungsvorrichtung steuert.

Insbesondere ist die Handhabungsvorrichtung zur Durchführung des Verfahrens nach einem der vorangegangenen Aspekte und/oder Aspekte der Ansprüche konfiguriert, wobei Merkmale der Unteransprüche jeweils auch unabhängig von Anspruch 1 betrachtet werden können.

Bevorzugt ist die Handhabungsvorrichtung eine Beschichtungsmaschine. Die Beschichtungsmaschine kann eine Andruckrolle zum Aufbringen des Beschichtungsmaterials an einem Werkstück, insbesondere an einer Schmalseite des Werkstücks, aufweisen.

### Kurze Beschreibung der Zeichnungen

Fig. 1 zeigt schematisch das Zusammenspiel einzelner Teilnehmern bei der Handhabung eines Beschichtungsmaterials gemäß einer Ausführungsform des Verfahrens der vorliegenden Erfindung,
Fig. 2 zeigt ein Ablaufdiagramm einer Ausführungsform des Verfahrens der vorliegenden Erfindung.

### Detaillierte Beschreibung der bevorzugten Ausführungsformen

Nachfolgend werden anhand der beigefügten Figuren bevorzugte Ausführungsformen der vorliegenden Erfindung im Detail beschrieben. Weitere in diesem Zusammenhang genannte Modifikationen bestimmter Merkmale können jeweils einzeln miteinander kombiniert werden, um neue Ausführungsformen auszubilden.

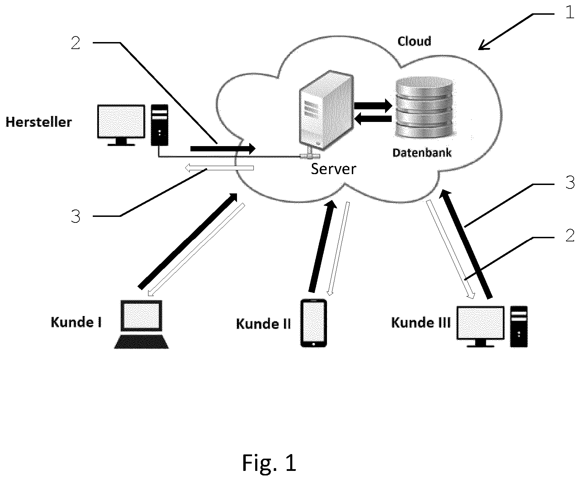

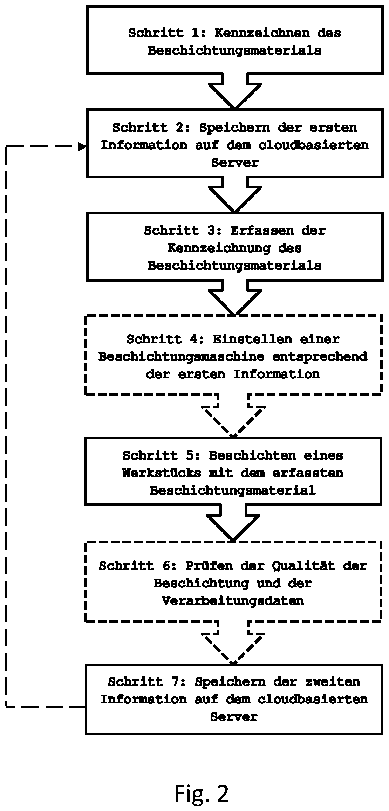

Fig. 1 zeigt schematisch das Zusammenspiel einzelner Teilnehmer bei der Handhabung eines Beschichtungsmaterials gemäß einer Ausführungsform des Verfahrens der vorliegenden Erfindung. Beispielhaft ist hier ein Hersteller eines Beschichtungsmaterials zusammen mit drei Kunden bzw. drei verarbeitenden Betrieben dargestellt. Wie der Fig. 1 weiter entnommen werden kann, stellt ein cloudbasierter Server 1 eine Kommunikationsschnittstelle zwischen dem Hersteller und den Kunden (I bis III) dar. Wie in der Fig. 1 anhand einer durchgehenden Verbindungslinie zwischen einem Computer des Herstellers und dem cloudbasierten Server 1 veranschaulicht, hat lediglich der Hersteller vollen Zugriff auf den Server. Entsprechend fungiert der Hersteller als Administrator des Servers 1 und verwaltet eine auf dem Server 1 aufgesetzte Datenbank. Auf welche die Kunden Zugriff, insbesondere beschränkten Zugriff haben. Hierbei können die Kunden wie veranschaulicht mittels einer Steuerungseinrichtung einer Verarbeitungsvorrichtung, insbesondere einer Beschichtungsmaschine, eines Desktop-Computers oder mittels eines mobilen Geräts, wie einem Tablet, einem Laptop, einem Smartphone, etc., Zugriff auf den cloudbasierten Server 1 haben. Wie später im Detail in Bezug auf Fig. 2 beschrieben, kann der Hersteller in der Datenbank des Servers 1 eine erste Information 2, die ein gekennzeichnetes Beschichtungsmaterial betrifft, speichern und somit über den cloudbasierten Server 1 für die Kunden zugänglich machen. Die Kunden ihrerseits können auf diese gespeicherte erste Information 2 zugreifen und selbst eine zweite Information 3, die sich auf das gleiche Beschichtungsmaterial oder zumindest auf ein Beschichtungsmaterial von der gleichen Art bezieht, auf dem Server 1 speichern. Nachdem seitens der Kunden diese zweite Information 3 auf dem Server gespeichert wurde kann wiederum der Hersteller auf diese zweite Information 3 zugreifen. Aus diesem Grund sind jeweils zwischen Hersteller und Server sowie den einzelnen Kunden und dem Server jeweils zwei Pfeile dargestellt, die den Kommunikationsfluss veranschaulichen.

Fig. 2 zeigt ein Ablaufdiagramm einer Ausführungsform des Verfahrens der vorliegenden Erfindung. Hierbei wird in Schritt 1 seitens eines Herstellers an einem vorzugsweise fertig gestellten Beschichtungsmaterial eine Kennzeichnung zur Identifikation einer das Beschichtungsmaterial betreffenden ersten Information 2 angebracht. Dabei kann die Kennzeichnung beispielsweise in Form eines Barcodes oder eines RFID-Tags angebracht werden.

Im zweiten Schritt des Verfahrens wird dann die das Beschichtungsmaterial betreffende erste Information 2, insbesondere eine Artikelnummer, mit der das Beschichtungsmaterial in der Datenbank des cloudbasierten Servers 1 eindeutig identifizierbar ist, sowie das Beschichtungsmaterial betreffende Verarbeitungsdaten, auf dem cloudbasierten Server 1 gespeichert, insbesondere unter der Artikelnummer gespeichert.

Anschließend wird in der Regel das fertige Beschichtungsmaterial verpacket und zu einem Kunden bzw. einem verarbeiteten Betrieb geliefert.

Wird das Beschichtungsmaterial zur Beschichtung eines Werkstücks benötigt, kann der Kunde in Schritt 3 das jeweilige Beschichtungsmaterial durch Erfassen der Kennzeichnung des Beschichtungsmaterials eindeutig identifizieren. Hierbei greift der Kunde mittels der in der Kennzeichnung, insbesondere in der ersten Information 2, abgelegten Artikelnummer auf den cloudbasierten Server 1 zu und identifiziert das Beschichtungsmaterial. Hierbei kann er auf weitere mit der Artikelnummer verknüpfte Daten der ersten Information 2, wie z.B. Verarbeitungsdaten usw. zugreifen.

Optional ist ein Schritt 4 dargestellt, welcher durch eine gestrichelte Linie als optional gekennzeichnet ist. In Schritt 4 kann anhand der seitens des cloudbasierten Servers 1 bereitgestellten ersten Information 2, insbesondere Verarbeitungsdaten, eine Beschichtungsmaschine entsprechend den Anforderungen des identifizierten Beschichtungsmaterials eingestellt werden, insbesondere automatisch eingestellt werden. Darunter ist zu verstehen, dass eine Steuerung der Beschichtungsmaschine nach Erfassen der Kennzeichnung und der damit verbundenen Identifizierung des eingelegten Beschichtungsmaterials automatisch die notwendigen Verarbeitungsdaten (Verarbeitungsparameter) vom cloudbasierten Server 1 bezieht und die Beschichtungsmaschine entsprechend einrichtet.

Anschließend erfolgt gemäß der vorliegenden Ausführungsform der vorliegenden Erfindung in Schritt 5 eine Beschichtung eines Werkstücks mit dem erfassten und identifizierten Beschichtungsmaterial, wobei die Beschichtung bevorzugt vollautomatisch erfolgt.

Im nachfolgenden Schritt 6, welcher wiederum ein optionaler Schritt ist, kann die Qualität der Beschichtung geprüft werden. Dabei kann die Überprüfung der Qualität vollautomatisch durch eine Prüfeinrichtung, wie zum Beispiel durch ein Kamerasystem oder dergleichen, durchgeführt werden, oder seitens eines Bedieners durch Sichtprüfung ausgeführt werden.

Anschließend wird in einem letzten Schritt 7 eine das Beschichtungsmaterial betreffende zweite Information 3 auf dem cloudbasierten Server 1 gespeichert. Hierbei handelt es sich bevorzugt um durch die Verarbeitung des Beschichtungsmaterials gewonnene Erfahrungswerte bzw. optimierte Verarbeitungsdaten zur Verarbeitung des Beschichtungsmaterials sowie der im Schritt 6 gegebenenfalls ermittelten Qualitätsbeurteilung.

Basierend auf der im Server 1 gespeicherten zweiten Information 2, insbesondere falls seitens verschiedener Kunden bezüglich einer gleichen Beschichtungsmaterialart zweite Informationen 3 hinterlegt wurden, kann der Hersteller eine Auswertung der Ansammlung von zweiten Informationen 3 vornehmen und basierend darauf gegebenenfalls optimierte Herstellungsparameter des Beschichtungsmaterials oder optimierte Verarbeitungsdaten für das Beschichtungsmaterial ermitteln. Falls optimierte Verarbeitungsdaten ermittelbar sind, können diese als aktualisierte, erste Information 2 auf dem cloudbasierten Server 1 gespeichert werden und somit Kunden für die zukünftige Verarbeitung des gleichen Beschichtungsmaterials zur Verfügung gestellt werden.

### Weitere Ausführungsformen

1. Verfahren zur Handhabung eines Beschichtungsmaterials, insbesondere eines Beschichtungsmaterials zum Anbringen an einer Schmalseite eines Werkstücks, umfassend die Schritte:
   Kennzeichnen des Beschichtungsmaterials mit einer Kennzeichnung zur Identifikation einer das Beschichtungsmaterial betreffenden ersten Information (2),
   Speichern der das Beschichtungsmaterial betreffenden ersten Information (2) auf einem cloudbasierten Server (1),
   Erfassen der Kennzeichnung des Beschichtungsmaterials, wodurch die das Beschichtungsmaterial betreffende erste Information (2) über den cloudbasierten Server (1) zugänglich wird.
2. Verfahren nach Ausführungsform 1, dadurch gekennzeichnet, dass das Verfahren weiterhin umfasst:
   Speichern einer das Beschichtungsmaterial betreffenden zweiten Information (3), insbesondere von Verarbeitungsdaten, auf dem cloudbasierten Server (1), wobei das Speichern der zweiten Information (3) bevorzugt nach Erfassen der Kennzeichnung des Beschichtungsmaterials und nach Verarbeitung des Beschichtungsmaterials erfolgt.
3. Verfahren gemäß Ausführungsform 1 oder 2, dadurch gekennzeichnet, dass die Kennzeichnung des Beschichtungsmaterials während eines Herstellungsprozess des Beschichtungsmaterials erfolgt, und
   das Erfassen der Kennzeichnung des Beschichtungsmaterials während der Verarbeitung des Beschichtungsmaterials, insbesondere während eines Beschichtungsprozess eines Werkstücks mit dem Beschichtungsmaterial, erfolgt,
   wobei das Erfassen der Kennzeichnung des Beschichtungsmaterials bevorzugt durch einen Barcode-Leser, einen RFID-Leser und/oder ein NFC-System erfolgt.
4. Verfahren gemäß einer der vorangegangenen Ausführungsformen, dadurch gekennzeichnet, dass die erste Information (2) ausgewählt ist aus: einer Artikelnummer, einer Dimension, einer Eigenschaft, einer Chargennummer, eines Herstellungsdatums, eines Haltbarkeitsdatums, und/oder Verarbeitungsdaten des Beschichtungsmaterials,
   insbesondere einer Schmelztemperatur eines Haftmittels oder der Haftschicht des Beschichtungsmaterials.
5. Verfahren gemäß einer der vorangegangenen Ausführungsformen 2 bis 4, dadurch gekennzeichnet, dass die zweite Information (3) ausgewählt ist aus: einer Artikelnummer, Verarbeitungsdaten des Beschichtungsmaterials wie eine Schmelztemperatur eines Haftmittels oder einer Haftschicht des Beschichtungsmaterials, ein Anpressdruck, eine Aushärtezeit des Haftmittels oder der Haftschicht, ein Feedback, eine Qualitätsbewertung des Beschichtungsmaterials und dergleichen.
6. Verfahren gemäß einer der vorangegangenen Ausführungsformen, dadurch gekennzeichnet, dass nach Verarbeiten des Beschichtungsmaterials über das Erfassen der Kennzeichnung Verarbeitungsdaten, insbesondere als vorteilhaft beurteilte Verarbeitungsdaten, auf dem cloudbasierten Server (1) speicherbar sind, wobei die Speicherung der Verarbeitungsdaten bevorzugt beschichtungsmaterialspezifisch erfolgt.
7. Verfahren gemäß einer der vorangegangenen Ausführungsformen, dadurch gekennzeichnet, dass die auf dem cloudbasierten Server (1) gespeicherte, Beschichtungsmaterial betreffende erste Information (2) aktualisierbar ist, wobei bevorzugt Verarbeitungsdaten wie eine Schmelztemperatur eines Haftmittels oder einer Haftschicht des Beschichtungsmaterials, ein Anpressdruck, eine Aushärtezeit des Haftmittels oder der Haftschicht und dergleichen aktualisierbar sind.
8. Verfahren gemäß einer der vorangegangenen Ausführungsformen 2 bis 7, dadurch gekennzeichnet, dass basierend auf einer Vielzahl von auf dem cloudbasierten Server (1) gespeicherten zweiten Informationen (3), insbesondere Verarbeitungsdaten, die eindeutig einem spezifischen Beschichtungsmaterial und/oder einer spezifischen Charge zuordenbar sind, optimierte Verarbeitungsdaten und/oder Verarbeitungsalgorithmen ermittelbar sind,
   wobei bevorzugt die ermittelten optimierten Verarbeitungsdaten und/oder Verarbeitungsalgorithmen als aktualisierte erste Information (2) weiterverwendbar sind und/oder als aktualisierte erste Information (2) auf dem cloudbasierten Server (1) speicherbar sind.
9. Verfahren nach Ausführungsform 8, dadurch gekennzeichnet, dass basierend auf den ermittelten optimierten Verarbeitungsdaten und/oder Verarbeitungsalgorithmen eine automatische Aktualisierung von in Bearbeitungsvorrichtungen gespeicherten Verarbeitungsdaten und/oder Verarbeitungsalgorithmen erfolgt.
10. Verfahren gemäß einer der vorangegangenen Ausführungsformen 2 bis 9, dadurch gekennzeichnet, dass basierend auf einer Vielzahl von auf dem cloudbasierten Server (1) gespeicherten zweiten Informationen (3(, insbesondere Qualitätsbewertungen eines spezifischen Beschichtungsmaterials, Rückschlüsse auf Fertigungsprobleme, optimierte Fertigungsparameter, Verschleißerscheinungen bei der Herstellung des Beschichtungsmaterials und/oder bei der Verarbeitung des Verschleißmaterials und der gleichen möglich sind.
11. Verfahren nach einer der vorangegangenen Ausführungsformen 2 bis 10, dadurch gekennzeichnet, dass die zweite Information (3), insbesondere als vorteilhaft beurteilte Verarbeitungsdaten, automatisch von der Verarbeitungsvorrichtung, insbesondere der Beschichtungsmaschine, auf dem cloudbasierten Server (1) gespeichert wird.
12. Verfahren gemäß einer der vorangegangenen Ausführungsformen 2 bis 11, dadurch gekennzeichnet, dass die erste Information (2) und die zweite Information (3) auf dem cloudbasierten Server (1) passwortgeschützt sind, wobei das Passwort in der Kennzeichnung des Beschichtungsmaterials hinterlegt ist.
13. Verfahren gemäß einer der vorangegangenen Ausführungsformen, dadurch gekennzeichnet, dass das Erfassen der Kennzeichnung des Beschichtungsmaterials mittels einer Beschichtungsmaschine erfolgt, durch welche Beschichtungsmaschine das Beschichtungsmaterial verwendet wird,
   wobei bevorzugt die Beschichtungsmaschine eine Andruckeinrichtung, insbesondere eine Andruckwalze, zum Aufbringen des Beschichtungsmaterials an einem, bevorzugt plattenförmigen, Werkstück umfasst,
   wobei nach Erfassen der Kennzeichnung des Beschichtungsmaterials die erste Information (2) in die Steuereinrichtung der Beschichtungsmaschine geladen wird.
14. Verfahren gemäß Ausführungsform 13, dadurch gekennzeichnet, dass die Steuereinrichtung auf Grundlage der ersten Information (2) ein Werkzeug oder ein Aggregat der Beschichtungsmaschine einstellt und/oder aktiviert, wobei insbesondere eine Leistung einer Energiequelle, wie eines Laser, einer Mikrowellenquellen, einer Heißluftquelle oder einer Infrarotquelle, zum Aktivieren einer Haftschicht des Beschichtungsmaterials eingestellt und/oder aktiviert wird.
15. Verfahren gemäß einer der vorangegangenen Ausführungsformen, dadurch gekennzeichnet, dass die Kennzeichnung am Beschichtungsmaterial eingeprägt, aufgebracht, insbesondere aufgeklebt, eingebracht, und/oder aufgedruckt ist.
16. Verwendung eines Beschichtungsmaterials, insbesondere eines Beschichtungsmaterials zum Anbringen an einer Schmalseite eines Werkstücks, in Kombination mit einer Beschichtungsmaschine,
   wobei das Beschichtungsmaterial an der Beschichtungsmaschine eingeführt wird, um auf einem, insbesondere plattenförmigen, Werkstück aufgebracht zu werden, wobei eine Erfassungseinrichtung eine Kennzeichnung des Beschichtungsmaterials erfasst, wodurch eine das Beschichtungsmaterial betreffende, auf einem cloudbasierten Server (1) gespeicherte erste Information (2) der Beschichtungsmaschine bereitgestellt wird, insbesondere in eine Steuereinrichtung der Beschichtungsmaschine geladen wird.
17. Handhabungsvorrichtung für ein Beschichtungsmaterial, insbesondere zum Anbringen des Beschichtungsmaterials an einer Schmalseite eines Werkstücks, umfassend:
   eine Erfassungseinrichtung zum Erfassen einer Kennzeichnung des Beschichtungsmaterials, wobei die Kennzeichnung zur Identifikation einer das Beschichtungsmaterial betreffenden ersten Information (2) dient,
   eine Übertragungseinrichtung zum Übertragen der Kennzeichnung an einen cloudbasierten Server (1), der die erste Information (2) in Relation zur Kennzeichnung des Beschichtungsmaterials gespeichert hat,
   eine Empfangseinrichtung zum Empfang der das Beschichtungsmaterial betreffenden ersten Information (2) von dem cloudbasierten Server (1), und
   eine Steuereinrichtung, die basierend auf der empfangenen ersten Information (2) die Handhabungsvorrichtung steuert.
18. Handhabungsvorrichtung nach Ausführungsform 17, wobei die Handhabungsvorrichtung eine Beschichtungsmaschine ist.

## Patentansprüche

1. Verfahren zur Handhabung eines Beschichtungsmaterials, insbesondere eines Beschichtungsmaterials zum Anbringen an einer Schmalseite eines Werkstücks, umfassend die Schritte:
Kennzeichnen des Beschichtungsmaterials mit einer Kennzeichnung zur Identifikation einer das Beschichtungsmaterial betreffenden ersten Information (2),
Speichern der das Beschichtungsmaterial betreffenden ersten Information (2) auf einem cloudbasierten Server (1),
Erfassen der Kennzeichnung des Beschichtungsmaterials, wodurch die das Beschichtungsmaterial betreffende erste Information (2) über den cloudbasierten Server (1) zugänglich wird,
Speichern einer das Beschichtungsmaterial betreffenden zweiten Information (3) auf dem cloudbasierten Server (1), wobei das Speichern nach Erfassen der Kennzeichnung des Beschichtungsmaterials und nach Verarbeitung des Beschichtungsmaterials erfolgt, wobei die Verarbeitung des Beschichtungsmaterials ein Beschichtungsprozess eines Werkstücks mit dem Beschichtungsmaterial ist.

2. Verfahren gemäß Anspruch 1, **dadurch gekennzeichnet, dass** die Kennzeichnung des Beschichtungsmaterials während eines Herstellungsprozess des Beschichtungsmaterials erfolgt, und
das Erfassen der Kennzeichnung des Beschichtungsmaterials während der Verarbeitung des Beschichtungsmaterials insbesondere während eines Beschichtungsprozess eines Werkstücks mit dem Beschichtungsmaterial, erfolgt,
wobei das Erfassen der Kennzeichnung des Beschichtungsmaterials bevorzugt durch einen Barcode-Leser, einen RFID-Leser und/oder ein NFC-System erfolgt.

3. Verfahren gemäß Anspruch 1 oder 2, **dadurch gekennzeichnet, dass** die erste Information (2) ausgewählt ist aus: einer Artikelnummer, einer Dimension, einer Eigenschaft, einer Chargennummer, eines Herstellungsdatums, eines Haltbarkeitsdatums, und/oder Verarbeitungsdaten des Beschichtungsmaterials, insbesondere einer Schmelztemperatur eines Haftmittels oder der Haftschicht des Beschichtungsmaterials.

4. Verfahren gemäß einem der vorangegangenen Ansprüche, **dadurch gekennzeichnet, dass** die zweite Information (3) ausgewählt ist aus: einer Artikelnummer, Verarbeitungsdaten des Beschichtungsmaterials wie eine Schmelztemperatur eines Haftmittels oder einer Haftschicht des Beschichtungsmaterials, ein Anpressdruck, eine Aushärtezeit des Haftmittels oder der Haftschicht, ein Feedback, eine Qualitätsbewertung des Beschichtungsmaterials und dergleichen.

5. Verfahren gemäß einem der vorangegangenen Ansprüche, **dadurch gekennzeichnet, dass** nach Verarbeiten des Beschichtungsmaterials über das Erfassen der Kennzeichnung Verarbeitungsdaten, insbesondere als vorteilhaft beurteilte Verarbeitungsdaten, auf dem cloudbasierten Server (1) speicherbar sind, wobei die Speicherung der Verarbeitungsdaten bevorzugt beschichtungsmaterialspezifisch erfolgt, und/oder die auf dem cloudbasierten Server (1) gespeicherte, Beschichtungsmaterial betreffende erste Information (2) aktualisierbar ist, wobei bevorzugt Verarbeitungsdaten wie eine Schmelztemperatur eines Haftmittels oder einer Haftschicht des Beschichtungsmaterials, ein Anpressdruck, eine Aushärtezeit des Haftmittels oder der Haftschicht und dergleichen aktualisierbar sind.

6. Verfahren gemäß einem der vorangegangenen Ansprüche, **dadurch gekennzeichnet, dass** basierend auf einer Vielzahl von auf dem cloudbasierten Server (1) gespeicherten zweiten Informationen (3), insbesondere Verarbeitungsdaten, die eindeutig einem spezifischen Beschichtungsmaterial und/oder einer spezifischen Charge zuordenbar sind, optimierte Verarbeitungsdaten und/oder Verarbeitungsalgorithmen ermittelbar sind,
wobei bevorzugt die ermittelten optimierten Verarbeitungsdaten und/oder Verarbeitungsalgorithmen als aktualisierte erste Information (2) weiterverwendbar sind und/oder als aktualisierte erste Information (2) auf dem cloudbasierten Server (1) speicherbar sind, und/oderbasierend auf den ermittelten optimierten Verarbeitungsdaten und/oder Verarbeitungsalgorithmen eine automatische Aktualisierung von in Bearbeitungsvorrichtungen gespeicherten Verarbeitungsdaten und/oder Verarbeitungsalgorithmen erfolgt.

7. Verfahren gemäß einem der vorangegangenen Ansprüche, **dadurch gekennzeichnet, dass** basierend auf einer Vielzahl von auf dem cloudbasierten Server (1) gespeicherten zweiten Informationen (3), insbesondere Qualitätsbewertungen eines spezifischen Beschichtungsmaterials, Rückschlüsse auf Fertigungsprobleme, optimierte Fertigungsparameter, Verschleißerscheinungen bei der Herstellung des Beschichtungsmaterials und/oder bei der Verarbeitung des Verschleißmaterials und der gleichen möglich sind.

8. Verfahren nach einem der vorangegangenen Ansprüche, **dadurch gekennzeichnet, dass** die zweite Information (3), insbesondere als vorteilhaft beurteilte Verarbeitungsdaten, automatisch von der Verarbeitungsvorrichtung, insbesondere der Beschichtungsmaschine, auf dem cloudbasierten Server (1) gespeichert wird, und/oder die erste Information (2) und die zweite Information (3) auf dem cloudbasierten Server (1) passwortgeschützt sind, wobei das Passwort in der Kennzeichnung des Beschichtungsmaterials hinterlegt ist.

9. Verfahren gemäß einem der vorangegangenen Ansprüche, **dadurch gekennzeichnet, dass** das Erfassen der Kennzeichnung des Beschichtungsmaterials mittels einer Beschichtungsmaschine erfolgt, durch welche Beschichtungsmaschine das Beschichtungsmaterial verwendet wird,
wobei bevorzugt die Beschichtungsmaschine eine Andruckeinrichtung, insbesondere eine Andruckwalze, zum Aufbringen des Beschichtungsmaterials an einem, bevorzugt plattenförmigen, Werkstück umfasst,
wobei nach Erfassen der Kennzeichnung des Beschichtungsmaterials die erste Information (2) in die Steuereinrichtung der Beschichtungsmaschine geladen wird.

10. Verfahren gemäß Anspruch 9, **dadurch gekennzeichnet, dass** die Steuereinrichtung auf Grundlage der ersten Information (2) ein Werkzeug oder ein Aggregat der Beschichtungsmaschine einstellt und/oder aktiviert, wobei insbesondere eine Leistung einer Energiequelle, wie eines Laser, einer Mikrowellenquellen, einer Heißluftquelle oder einer Infrarotquelle, zum Aktivieren einer Haftschicht des Beschichtungsmaterials eingestellt und/oder aktiviert wird.

11. Verfahren gemäß einem der vorangegangenen Ansprüche, **dadurch gekennzeichnet, dass** die Kennzeichnung am Beschichtungsmaterial eingeprägt, aufgebracht, insbesondere aufgeklebt, eingebracht, und/oder aufgedruckt ist.

12. Verwendung eines Beschichtungsmaterials, insbesondere eines Beschichtungsmaterials zum Anbringen an einer Schmalseite eines Werkstücks, in Kombination mit einer Beschichtungsmaschine,
wobei das Beschichtungsmaterial an der Beschichtungsmaschine eingeführt wird, um auf einem, insbesondere plattenförmigen, Werkstück aufgebracht zu werden, wobei eine Erfassungseinrichtung eine Kennzeichnung des Beschichtungsmaterials erfasst, wodurch eine das Beschichtungsmaterial betreffende, auf einem cloudbasierten Server (1) gespeicherte erste Information (2) der Beschichtungsmaschine bereitgestellt wird, insbesondere in eine Steuereinrichtung der Beschichtungsmaschine geladen wird, und nach Verarbeitung des Beschichtungsmaterials eine das Beschichtungsmaterial betreffenden zweiten Information auf dem cloudbasierten Server (1) gespeichert wird, wobei die Verarbeitung des Beschichtungsmaterials ein Beschichtungsprozess eines Werkstücks mit dem Beschichtungsmaterial ist.

13. Handhabungsvorrichtung zum Anbringen des Beschichtungsmaterials an einer Schmalseite eines Werkstücks, umfassend:
eine Erfassungseinrichtung zum Erfassen einer Kennzeichnung des Beschichtungsmaterials, wobei die Kennzeichnung zur Identifikation einer das Beschichtungsmaterial betreffenden ersten Information (2) dient,
eine Übertragungseinrichtung zum Übertragen der Kennzeichnung an einen cloudbasierten Server (1), der die erste Information (2) in Relation zur Kennzeichnung des Beschichtungsmaterials gespeichert hat,
eine Empfangseinrichtung zum Empfang der das Beschichtungsmaterial betreffenden ersten Information (2) von dem cloudbasierten Server (1),
eine Steuereinrichtung, die basierend auf der empfangenen ersten Information (2) die Handhabungsvorrichtung steuert,
wobei die Handhabungsvorrichtung ferner dazu eingerichtet ist, nach Verarbeitung des Beschichtungsmaterials eine das Beschichtungsmaterial betreffende zweite Information (3) auf dem cloudbasierten Server (3) zu speichern, wobei die Verarbeitung des Beschichtungsmaterials ein Beschichtungsprozess eines Werkstücks mit dem Beschichtungsmaterial ist.

14. Handhabungsvorrichtung nach Anspruch 13, wobei die Handhabungsvorrichtung eine Beschichtungsmaschine ist.
